(19) **Europäisches Patentamt**
**European Patent Office**
**Office européen des brevets**

(11) **EP 2 963 974 B1**

(12) **EUROPEAN PATENT SPECIFICATION**

(45) Date of publication and mention
of the grant of the patent:
**14.07.2021 Bulletin 2021/28**

(51) Int Cl.:
**H04W 36/24** *(2009.01)*          **H04W 24/10** *(2009.01)*
**H04W 36/00** *(2009.01)*          **H04W 48/16** *(2009.01)*

(21) Application number: **15162975.5**

(22) Date of filing: **27.02.2013**

(54) **METHOD FOR OPTIMISING MOBILITY MANAGEMENT IN A CELLULAR NETWORK AND IN A MOBILE TERMINAL OF A CELLULAR NETWORK**

VERFAHREN ZUR OPTIMIERUNG DER MOBILITÄTSVERWALTUNG IN EINEM MOBILFUNKNETZ UND IN EINEM MOBILEN ENDGERÄT EINES MOBILNETZWERKES

PROCÉDÉ PERMETTANT D'OPTIMISER LA GESTION DE LA MOBILITÉ DANS UN RÉSEAU CELLULAIRE ET TERMINAL MOBILE D'UN RÉSEAU CELLULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.01.2016 Bulletin 2016/01**

(62) Document number(s) of the earlier application(s) in accordance with Art. 76 EPC:
**13001007.7 / 2 773 149**

(73) Proprietor: **Telefónica Germany GmbH & Co. OHG**
**80992 München (DE)**

(72) Inventors:
  • **Leth-Espensen, Mads**
    **82110 Germering (DE)**
  • **Widder, Dr. Wolfgang**
    **82362 Weilheim (DE)**
  • **Müllner, Robert**
    **81479 München (DE)**

(74) Representative: **Herrmann, Uwe**
    **Lorenz Seidler Gossel**
    **Rechtsanwälte Patentanwälte**
    **Partnerschaft mbB**
    **Widenmayerstraße 23**
    **80538 München (DE)**

(56) References cited:
**WO-A1-2010/107448          WO-A1-2010/121418**
**WO-A1-2012/096403          WO-A2-2012/148229**
**US-A1- 2003 203 735        US-A1- 2011 177 819**

• **CHANDRA C ET AL: "Determination of optimal handover boundaries in a cellular network based on traffic distribution analysis of mobile measurement reports", VEHICULAR TECHNOLOGY CONFERENCE, 1997, IEEE 47TH PHOENIX, AZ, USA 4-7 MAY 1997, NEW YORK, NY, USA, IEEE, US, vol. 1, 4 May 1997 (1997-05-04), pages 305-309, XP010228800, DOI: 10.1109/VETEC.1997.596369 ISBN: 978-0-7803-3659-9**
• **"Universal Mobile Telecommunications System (UMTS); LTE; Universal Terrestrial Radio Access (UTRA) and Evolved Universal Terrestrial Radio Access (E-UTRA); Radio measurement collection for Minimization of Drive Tests (MDT); Overall description; Stage 2 (3GPP TS 37.320 version 11.2.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V11.2.0, 1 February 2013 (2013-02-01), XP014156810,**

**Description**

The present invention is related to a method for optimising mobility management in a cellular network with at least one mobile terminal. The invention is further directed to a mobile cellular network and a mobile terminal for performing the inventive method.

Mobile networks based on the 3rd Generation Partnership Project (3GPP) standard are deployed all over the world. More than 5 billion subscriptions using the technologies Global System for Mobile Communications (GSM), Universal Mobile Telecommunications System (UMTS) / High Speed Packet Access (HSPA) and Long Term Evolution (LTE) make these technologies to the most popular and most successful mobile network systems worldwide.

Mobility management is one of the major functions of a GSM, UMTS or a LTE network that allows service continuity for mobile phone users while moving within the cellular network.

When a mobile terminal (User Equipment, UE) is switched on, a Public Land Mobile Network (PLMN) is selected and the UE searches for a suitable cell of this PLMN to camp on. The UE will, if necessary, register its presence by means of a Non Access Stratum (NAS) registration procedure in the registration area of the chosen cell. If the UE finds a more suitable cell it reselects onto that cell and camps on it. If the new cell is in a different registration area, location registration is performed (ETSI TS 125 304 V5.2.0, "UE Procedures in Idle Mode and Procedures for Cell Reselection in Connected Mode (3GPP TS 25.304 version 5.2.0 Release 5)", 2002, http://www.etsi.org/deliver/etsi_ts/125300_125399/125304/05.02.00_60/ts_125304v 050200p.pdf).

Document WO2010121418 discloses a handover problem identification method for mobile telecommunications system, wherein measures of link quality taken during handover execution of mobile terminal from first to second base station are stored and used for identifying network problems.

One of the fundamental principles of 3GPP mobility management is the option of moving an ongoing speech call or data session from one cell to another cell via handover or cell reselection. This is necessary to provide seamless service continuity if moving subscribers leave the coverage area of the cell. Handover or cell reselection is triggered if the receive signal level or receive quality fall below certain thresholds or for traffic load reasons.

The handover process can be divided into several parts, namely the measurement, processing, reporting, decision and execution phase. Triggering of handover is usually based on channel measurements consisting of signal level and signal quality. For that purpose measurements are made in uplink and downlink direction. Uplink measurements are performed by the Base Transceiver Station (BTS), UMTS base station (NodeB) or LTE base station (eNodeB). In downlink direction the UE measures and processes signal level and quality of the serving cell and neighbouring cells. Processing is done to filter out the effect of fast fading and Layer 1 measurement/estimation errors using a Layer 3 filter (M. Anas, F. D. Calabrese, P.-E. Ostling, K. I. Pedersen, P. E. Mogensen, "Performance Analysis of Handover Measurements and Layer 3 Filtering for UTRAN LTE", in proceedings of 18th Annual IEEE International Symposium on Personal, Indoor and Mobile Radio Communications(PIMRC'07), http://vbn.aau.dk/files/12841511/PIMRC2007_Handover.pdf).

In GSM networks, the mobile terminal measures the receive level of the Broadcast Control Channel (BCCH). The measurement results are included in the measurement report that is sent every 480 ms from the mobile terminal to the network. The decision about necessity of handover execution is done in the Base Station Controller (BSC). Before handover execution a channel in the target cell is reserved by the BSC. If this channel reservation is successful, the handover command is sent and the handover is executed (Wikipedia, http://de.wikipedia.org/wiki/Handover).

In UMTS networks handover measurements in downlink direction are based on receive level and receive quality measurements of the Common Pilot Channel (CPICH). The processed measurements are reported to the serving NodeB periodically or event based using Radio Resource Control (RRC) signalling. A handover is initiated if certain decision criteria are met. It is then executed by transferring the UE control to the target cell performing the network procedures with the assistance of the UE (M. Anas, F. D. Calabrese, P.-E. Ostling, K. I. Pedersen, P. E. Mogensen, "Performance Analysis of Handover Measurements and Layer 3 Filtering for UTRAN LTE", in proceedings of 18th Annual IEEE International Symposium on Personal, Indoor and Mobile Radio Communications(PIMRC'07), http://vbn.aau.dk/files/12841511/PIMRC2007_Handover.pdf)

The first phase in the handover process covers the cell identification. The cell identification depends mainly on the number of cells and multipath components that the UE can receive. The UE needs to check every peak in its matched filter. The fewer peaks there are the faster is the cell identification. The cell identification time depends on the number of multi paths, number of cells within the detection range, number of already found cells and size of the neighbour list (H. Holma, A. Toskala, 'WCDMA for UMTS: HSPA Evolution and LTE", 5th Edition, 2010, John Wiley &Sons, ISBN: 978-0-470-68646-1, http://eu.wiley.com/WileyCDA/WileyTitle/productCd0470686464.html.).

Some 3GPP performance requirements specified in the respective standard (3GPP TS 25.133 V9.2.0, "Requirements for support of radio resource management (FDD) (Release 9)", 2009, http://www.3gpp.org) are: The UE needs to be able to report the measurements within

(a) 200 ms from an already identified cell

(b) 800 ms from a new cell in the neighbour list (monitored set) and

(c) 30 s from a new cell outside the neighbour list (monitored set).

In the second phase the UE decodes the system frame number from Broadcast Channel (BCH) that is transmitted on the Primary Common Control Physical Channel (P-CCPCH). Before the pilot power (Ec) to the total cell power (Io) (Ec/Io, receive quality) is used by the active set update algorithm in the UE, some filtering is applied to make the results more reliable. The measurement is filtered on both Layer 1 and on Layer 3. The Layer 3 filtering can be controlled by the network. The handover measurement reporting from the UE to Radio Network Controller (RNC) can be configured to be periodic, as in GSM, or event triggered.

The neighbourhood list includes intra-frequency cells, inter-frequency cells, GSM cells and LTE cells.

In LTE handover measurements are done at the downlink reference symbols. The UE measures the Received Signal Strength (RSS) which includes path loss, antenna gain, log-normal shadowing and fast fading averaged over all the reference symbols within the measurement bandwidth. Filtered handover measurements of receive level and quality are updated every handover measurement period at the UE (M. Anas, F. D. Calabrese, P.-E. Ostling, K. I. Pedersen, P. E. Mogensen, "Performance Analysis of Handover Measurements and Layer 3 Filtering for UTRAN LTE", in proceedings of 18th Annual IEEE International Symposium on Personal, Indoor and Mobile Radio Communications (PIMRC'07), http://vbn.aau.dk/files/12841511/PIMRC2007_Handover.pdf).

The general problem is the long duration of cell identification in the handover measurement procedure including frequency scanning and measurements done by today's GSM, UMTS/HSPA and LTE terminals.

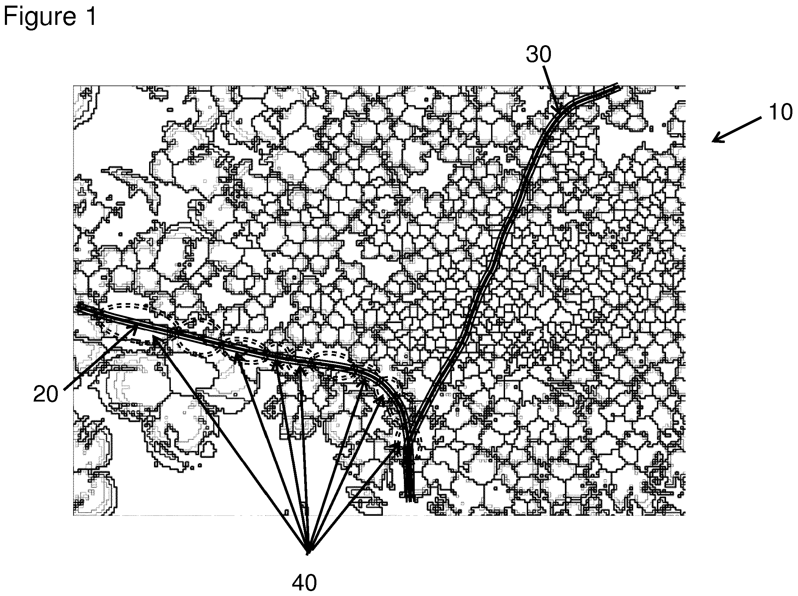

Figure 1 shows a coverage plot for suburban and urban areas in an UMTS/HSPA live network. The network plot 10 indicates coverage ranges in which a specific minimum indoor receive level is achieved. Coverage is provided in the whole area, i.e. the minimum outdoor receive level requirements for mobile speech and data services is granted. Different section linings indicate areas of higher receive levels in steps of 2 dB each. These graduations have been selected for a better visualisation of the cellular system consisting of a high number of cells. Two main routes 20 and 30 are plotted representing roads. In another example the routes could also represent railway lines or in a smaller extent pedestrian zones.

Dashed circles 40 in Figure 1 represent the coverage area of cells along the main route 20. On the way along this route from the bottom of the map towards the left border of the map a moving subscriber changes from one coverage area to the next. In case of an ongoing circuit-switched speech call the connection is handed over from one cell to another cell while the connection continues with interruption times more or less noticeable by the users. The target is to keep these interruptions in all network technologies as short as possible. This is a challenging task for network planning done by mobile network operators but also for manufacturers of mobile network systems and 3GPP standardisation.

Mobile operators deploy large coverage cells especially at motorways and railway lines to keep the number of cell changes low. This is achieved by using high output power and antennas with a small beam width. The implied trade-off between coverage, capacity and quality is a specific task for network optimisation. With this option the number of interruptions by handover can be reduced but not their interruption time.

A comparable situation exists for cell reselection for packet-switched data services. Packet-switched data services are characterised by their burst structure including short data transmission periods interrupted by pauses of no data transmission. When camping on a cell measurements to identify better suited cells are triggered if the receive level or receive quality falls below a specific threshold, e.g. Received Signal Code Power (RSCP) < -113 dBm and Received Energy per Chip divided by the Power Density in the Band (Ec/No) < - 8 dB for UMTS networks.

For handover and cell reselection standard procedures according to the current state of technology are applied. Drawback of these procedures is the relatively long duration for cell identification, including frequency scanning and measurements.

Summary of the invention

The invention is defined by the appendend claims. Preferred embodiments are subject of the dependent claims.

According to the invention measurement data collected during a regular handover and/or cell reselection procedure is stored in a database for future reuse. For example, during the measurement phase of a conventional handover or cell reselection procedure a mobile terminal identifies all relevant frequencies and for UMTS networks also scrambling codes within its reception area and measures their signal level and quality in downlink direction. The resulting signal relevant data of each measured frequency/cell is now stored for future reuse.

In UMTS Cell_DCH mode the mobile terminal permanently transmits or receives data and there is no opportunity to scan other UMTS, GSM or LTE frequencies to search for suited neighbouring cells. If the subscriber moves towards the coverage edge of the UMTS cell or if in its adjacency other UMTS cells use different frequencies, the mobile terminal can be notified by the network to switch to compressed mode. In compressed mode transmission is suspended for specific intervals to allow the mobile terminal to perform neighbour cell measurements. The measurement reports are transferred to the network. The latter takes decision about handover. It is the scope of the described invention to use measurement from the past to accelerate target cell selection.

In contrast in Cell_FACH state mobility management is performed by the mobile terminal and not by the network. If the mobile terminal identifies that another cell is better suited for connection to the network, cell change is autonomously performed by the mobile terminal. A notification has to be sent to the network that from then on all data are sent to the new cell.

It is important to note that in GSM networks using traditional frequency planning, different frequencies are used in neighbouring cells. To reduce interference in the network the same frequencies are only reused after a specific minimum distance, i.e. cells using the same frequencies are separated and other frequencies are used in the cells between them. In tight reuse GSM networks the same frequencies might be reused in neighbouring cells but measures are taken to avoid collisions in the frequency and time domain.

In UMTS networks frequencies are reused in adjacent cells but different scrambling codes are used. To each cell exactly one set of scrambling codes is assigned for cell coding in downlink direction. It is the task of cell planning to distribute these sets in such a way that neighbouring cells do not use the same set of scrambling codes for avoiding mutual disturbances. In this way each cell is uniquely characterised and distinguishing between neighbouring cells is possible.

The decisions about handover and cell reselection are event-based. An Active Set, a Monitored Set and a Detected Set of cells are used and intra-frequency, inter-frequency and inter-Radio Access Technology (inter-RAT) handovers are performed. The user terminal is informed from the network about the event configuration. If for one event candidates are identified, a measurement report is sent from the user terminal to the network and the network generally decides about handover or cell reselection.

For the sake of simplicity the following text describes the generation of a frequency list that is used by the user terminal to measure receive level and/or quality of signals on these frequencies. This is done because the user terminals perform the downlink measurements on these physical frequencies, while assignment of frequencies to specific cells is generally done by the network. For UMTS networks, although not explicitly stated in the following description, the term frequency is always related to the combination of a frequency and a specific scrambling code used in this cell.

According to the current state of technology, the measurements performed by the mobile terminal are only used for an actual handover or cell reselection procedure. These measurement results are discarded after execution of the handover or cell reselection. The intrinsic idea of this invention is to store this information and to reuse it for network optimisation, especially network planning and handover parameter optimisation.

In another preferred embodiment of this invention data in the local and global database are used by roamers for PLMN selection.

The inventive idea is applicable for all existing cellular network topologies or respective communication standards, in particular GSM, UMTS/HSPA, LTE and future standards.

Preferable, said data is stored within a local data base which is physically or logically connected to the respective mobile terminal. Particular preferable, the local database is located at or integrated into the mobile terminal. It is advantageous to have at least one separate local database to each of the mobile terminals supplied by the mobile cellular network.

Additionally or alternatively, the measurement data is conveyed to and stored in a global database accessible by all or at least some of the mobile terminals or rather the local databases. Local and global database can be logically or physically connected for data exchange.

Local databases might comprise temporary storage media with limited storage capacity. Global database might be long term storage medium.

According to one aspect of the invention at least one local and at least one global database are periodically and/or event triggered and/or in real time synchronized. Event triggered means that a synchronisation procedure is performed when an event occurs which requires access to the data stored in the local and/or global database. For instance, synchronisation might be triggered at the beginning of a handover and/or cell reselection procedure.

Real time synchronisation means that a synchronisation procedure is executed each time or mostly each time new data is stored and/or stored data is changed within the local and/or global database.

In a preferred aspect of the invention additional information is stored together with at least some or all measurement data, for instance physical information and/or quality information or event related data can be stored within the database.

It is conceivable that physical information includes at least one geographical coordinate of the current position of the mobile terminal. Position information is preferably determined by a GPS or GALILEO component of the mobile terminal and stored together with the measurement data. In particular, measurement data is stored with reference to the geographical position at which the measurement data was captured.

Further additional information includes the present time of the measurement and/or the currently used radio access technology. It is important to store the currently scanned frequency and/or the currently used scrambling code together with the measurement data. Further, data to be stored can contain information about the current best server.

Quality related information determined in active mode which might also be stored refers to the used speech codec and codec mode and/or the used modulation and coding scheme and/or the frame or block error rate.

Event related information can contain information about the current event which triggers a measurement procedure according to the present invention. Possible triggering events are a handover and/or cell reselection and/or a coverage hole and/or a call drop and/or a rejected call establishment attempt and/or rejected data session establishment attempt due to blocking.

Consequently, the local and global data base comprise information about the service quality of specified cells at specific coordinates within the mobile cellular network.

It is possible that the network and/or the stored data is reused for a future handover and/or cell reselection and/or PLMN selection procedure. For instance, means are integrated into the mobile user terminal or located at the system access side to analyze the stored measurement data. By analyzing the stored data a frequency list is derived which contains possible frequencies in the neighbourhood of the respective processing mobile terminal and their level and/or quality at this instant. These frequencies and for UMTS networks the used scrambling code might be relevant for a possible handover and/or cell reselection procedure. The generated list is based on former measurement results and experiences of the processing and/or any other mobile terminals. Regularly, said generated list contains a smaller number of frequencies for a handover and/or cell reselection procedure than a conventional neighbour list normally used for standard handover or reselection procedures. Therefore, the time needed for frequency identification can be noticeable reduced.

The frequency list is preferably derived from a measurement performed by this and/or any other mobile terminal in the past.

For instance, the frequency and scrambling code list is generated by comparing the geographical coordinates of the mobile terminal performing a handover and/or cell reselection to the stored measurement data. Therefore, the frequency list provides a number of cells/frequencies at a given geographical position which might perform best for a subsequent handover and/or cell reselection procedure.

The list is generated from

(a) Measurements done by the considered user terminal and stored in the local database. This aspect is useful as the mobility of a typical subscriber frequently covers same routes at different days, for example on the daily way from home to work and back again. To provide this information to a plurality of subscribers, the measured data can be conveyed from the local to a global database. If no information about preferred frequencies for the current geographical location of the subscriber is available in the local database or its content is out-of-date, for example due to change of the frequency plan by the network operator, the proposed frequency and scrambling code list can be requested from the global database.

(b) Measurements of other mobile terminals that conveyed the data from their local database to the global database. Data are then transferred from the global database to the local database of any other mobile terminal.

According to another aspect of the present invention the mobile terminal starts measuring the receive signal level and quality for all or at least some of the frequencies included in said frequency list during a handover and/or cell reselection procedure.

It is also possible that the measured and filtered receive signal level and quality for each frequency or frequency and scrambling code combination of the frequency list is compared to at least one defined target threshold when handover or cell reselection or PLMN selection is triggered. If the receive signal level and signal quality exceed the least one thresholds the cell of the identified frequency shall be used as a target cell for a handover and/or a cell reselection procedure. Preferable at least one threshold is defined for the signal level and at least one for the signal quality. In particular, both thresholds have to be exceeded to fulfil the requirements of a handover and/or cell reselection procedure.

If in case of handover or cell reselection or PLMN selection more than one frequency fulfils the at least one requirement it is reasonable to select the best suited frequency. For instance, all or at least some of these suitable frequencies are ranked. It is possible that the ranking process weights signal level and quality criteria and selects the best frequency due to their respective criteria score. Note that for UMTS networks always the combination of frequency and scrambling code has to be considered.

The decision for an appropriate frequency can be made autonomously by the mobile terminal and/or after consultation with the mobile cellular network or rather the respective processing means within the network.

In case that none of the frequencies included in the frequency list fulfils the at least one requirement it is conceivable that the measuring procedure is extended to a higher number of frequencies or scrambling codes. For instance, it is possible to revert to the conventional cell neighbour list which is used during a handover procedure known from the state of the art.

According to a preferred aspect of the invention the stored measurement data is used in a situation in which a conventional handover procedure fails. In that case the decision for any of the identified frequencies/cells is made autonomously by the mobile terminal itself and it informs the network about the preferred frequency and/or scrambling code. This allows continuity of an ongoing call or data session that might be dropped or interrupted without an autonomous decision of the mobile terminal.

According to another preferred aspect of the invention a conventional neighbour list is compared to the generated frequency list derived from the stored data during a handover or cell reselection procedure. In that case measurements of the received signal level and quality of neighbouring cells are performed by the mobile terminal only for matching frequencies.

Alternatively, it is also possible that the mobile terminal ranks the frequencies and/or scrambling codes to be scanned dependent on the comparison result between a conventional neighbour list and the generated frequency list. Preferable, the scanning order is modified wherein matching frequencies are favoured for the measurement procedure of adjacent cells.

It is also possible to suspend the measurement procedure if at least one or a defined number of frequencies which fulfil the requirements have been discovered.

Receive signal level and quality are measured for the matching frequencies in the given order. The cell of an identified frequency shall be proposed as a target cell for handover or cell reselection or PLMN selection if the respective signal level and quality exceeds at least one defined threshold.

According to the invention said measured data collected by at least one mobile terminal is used for network optimisation processes, especially network planning and handover parameter optimisation. The local and/or global data base is preferable connected to a network planning database and all relevant information for network planning is transferred to the network planning database, especially data about receive signal level and quality for the corresponding frequency at a given geographical position. The transferred information might be automatically used for identifying areas with poor coverage or poor quality and/or areas of frequent call or data session drops.

The invention is further directed to a mobile cellular network comprising means for performing the method according to the present invention. The same advantages obviously result from such a mobile cellular network which were presented further above with respect to the inventive method. In particular, the network comprises a global database which is accessible by at least one mobile user terminal or at least one local database integrated into or connected to at least one mobile user terminal. Further advantageous, the network comprises a network planning database which is logically or physically connectable with the global database.

In a preferred embodiment of this invention a small computer program in the mobile terminal (App) is used to optimise data for the geographical environment frequently resided by the user. Data collection is started after pressing a start button of this App. During the subscriber's move frequencies and scrambling codes of the best suited neighbouring cells are identified and data collection is terminated by manually pressing a stop button of the App. The user-initiated recording of data is beneficial especially for cells for which the target cell predefined from network side is not the best choice, e.g. a tunnel cell on a motorway might not be the best choice for a pedestrian in a town close to the motorway.

This user-initiated procedure represents a pull-service, whereas the network initiated procedure is executed as a push-service.

The invention is furthermore directed to a mobile terminal comprising means for performing the method according to the present invention.

The present invention will now be described in more detail with reference to an embodiment and to the drawings. There are shown:

Figure 1: a coverage plot for suburban and urban areas in an UMTS/HSPA live network,

Figure 2: a mobile network according to the invention based on the 3GPP standard,

Figure 3: an example for data storage according to the present invention and

Figure 4: a flow process diagram according to a preferred embodiment of the inventive method.

The basic idea of this invention is to substantially reduce the duration of handover or cell reselection or PLMN selection measurements by using additional information stored in local databases in the UEs and in external global databases.

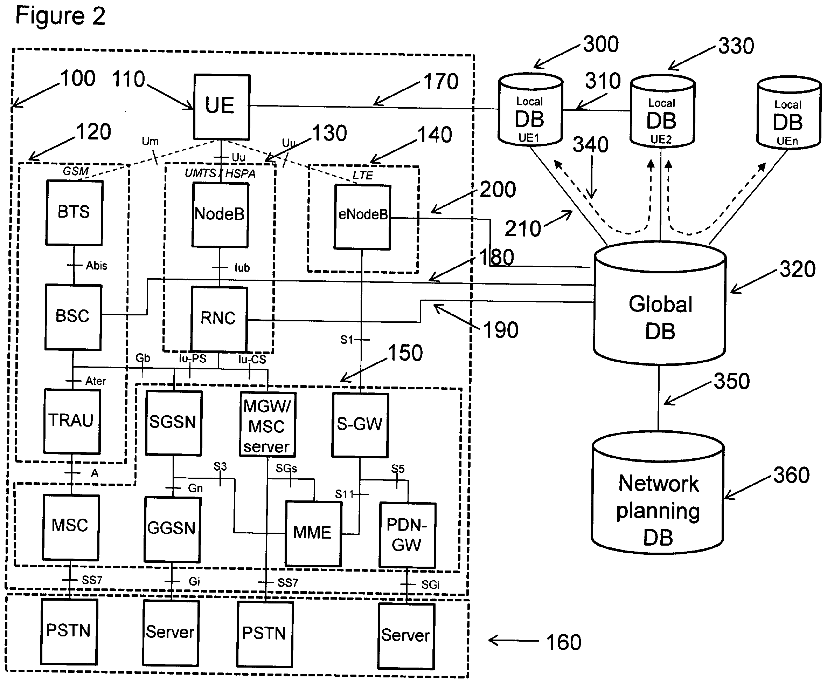

Figure 2 shows a mobile network 100 based on the 3GPP standard. The UE 110 is connected via the air interface to the radio access network based on the technologies GSM 120, UMTS/HSPA 130 or LTE 140. The solid line between the UE 110 and the UMTS/HSPA radio access network 130 indicates that the UE 110 is currently served by the UMTS/HSPA network, while a change of the Radio Access Technology (RAT) is possible indicated by the dashed interfaces between the UE 110 and the GSM 120 or LTE 140 network.

The radio access networks 120, 130 and 140 are connected to the core network 150, which is connected to the Public Switched Telephone Network (PSTN) for circuit-switched services and to servers in the Internet for packet-switched services 160.

In order to accelerate the handover measurement phase, scanning of frequencies and measurements of the receive signal level and quality in downlink direction shall start for a predefined set of frequencies, and where applicable scrambling codes (UMTS). The coded number of this predefined set for given geographical information shall be taken from the local database. The memory of the databases shall be filled with information collected by the UEs.

The receive level and quality measurements executed by the UE 110 shall be stored in the local database 300. Additional data shall be recorded. For each instance the following information shall be captured and stored together with the measurement results:

Physical information:

-   Geographical coordinates about the position of the UE 110: Preferably determined via Global Positioning System (GPS) or similar technologies like GALILEO.
-   Time: Actual time to identify out-of-date information during post-processing.
-   Radio access technology: GSM, UMTS/HSPA, LTE or others.
-   Scanned frequency: Coded frequency number of the used radio access technology.
-   Scrambling code (UMTS/HSPA).
-   Receive level.
-   Receive quality.
-   Best server.

Quality related information in active mode:

-   Used speech codec and codec mode: e.g. Adaptive Multi-Rate (AMR-NB) Full-Rate (FR) 12.2 in GSM or AMR12.2 in UMTS/LTE.
-   Used Modulation and Coding Scheme (MCS) / coding rate: e.g. MCS-9 in Enhanced General Packet Radio Service (E-GPRS) or 16 Quadrature Amplitude Modulation (QAM) in HSPA or 64QAM with coding rate 2/3 in LTE.
-   Frame error rate / block error rate: Average value for evaluating speech quality and data quality.

Events:

-   Handover / cell reselection.
-   Coverage hole.
-   Call drop.
-   Rejected call establishment attempts and data session establishment attempts due to lack of physical resources (blocking).

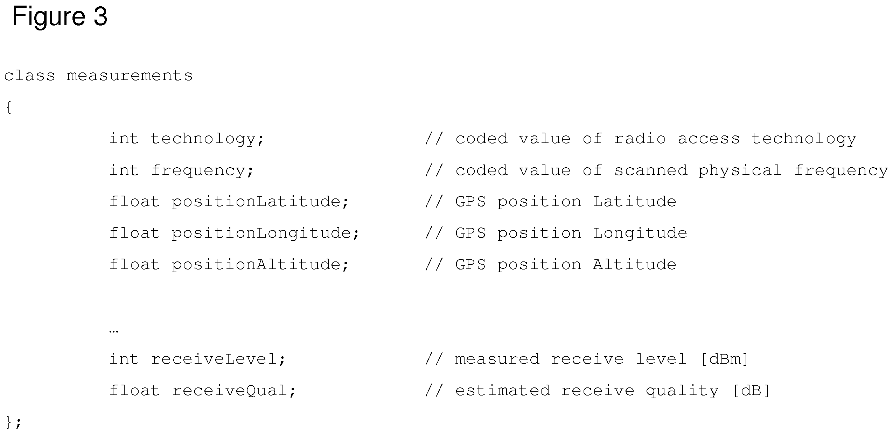

An example for data storage is shown in Figure 3. The data shall be temporarily stored in a database 300 of the UE 110 shown in Figure 2. The interface 170 is a logical connection between the UE 110 and the UE related database 300, the database is preferable located within the UE 110.

As the capacity of the memory of the UE 110 is limited, these data shall be transferred from the local database 300 of the UE 110 to a global database 320 in the network. Thus this information can also be provided to other subscribers accessing the global database. The locally stored data are preferable transmitted via the air interface Um, Uu to the radio access network and from the BSC (GSM) via the interface 180, from the RNC (UMTS/HSPA) via the interface 190 and from the eNodeB (LTE) via the interface 200 to the global database 320. The global database 320 can be physically integrated into any of the nodes, preferable into the BSC, RNC or eNodeB. Alternatively, the global data base 320 is realised as an external device that is logically connected to any of the network entities.

The information measured by a second mobile terminal UE 330 and locally stored in its database shall also be transferred via the air interface and the radio access network to the global database 320. Via this procedure an exchange of information between mobile terminals is possible. The logical interface 340 shows this procedure, the physical interfaces between UE1 and UE2 are the 3GPP air interfaces Um and Uu, the 3GPP interfaces in the radio access network Abis (GSM) and lub (UMTS/HSPA) and the interfaces 180, 190 and 200 for the interconnection of the radio access networks 120, 130 and 140 with the global database 320. Exchange of data shall preferably be done via an application for mobile terminals (App).

In another embodiment of this invention an exchange of data stored in the local database of one UE, e.g. of UE1 (300), to the local database of another UE, e.g. of UE2 (330), is done via any physical or logical interface. Direct data exchange is preferable done via the interface 310 using infrared, Bluetooth or USB as physical medium. Also data recorded via the App can be exchanged via these media. Indirect data exchange is preferable done via the 3GPP air interface and the mobile network nodes Operation and Maintenance Center (OMC) or Network Management Center (NMC) that controls the network entities.

The global database 320 is preferable connected via the interface 350 to a network planning database 360 for the exchange of frequency numbers, used scrambling codes and related physical and quality related information.

The use of the stored information for optimising search criteria for mobility management is explained in the following:

According to one embodiment the stored information shall be used for the optimisation of search criteria for cell change. Based on the geographical information of the current position of the user, not the higher number of frequencies defined in the neighbourhood list by 3GPP for the used technology and other accessible access technologies shall be scanned. Instead of applying the 3GPP standard procedure a list consisting of a lower number of proposed frequencies, and where applicable scrambling codes, shall be generated from information of the local database 300.

For consistency reasons the contents of the local database 300 shall be continuously synchronised with the global database 320. This allows that up-to-date information is available in the local database 300 when this information is required to accelerate neighbourhood cell identification. Thus, a time consuming query of the global database 320 is avoided. For this purpose data shall be sent from the global database 320 via the radio access network and the air interface to the mobile 110 and its local database 300 whenever changes occur and transmission capacity is available.

The generated list from the local database 300 shall include a low number of frequencies and, where applicable scrambling codes, that are identified to be used in the surroundings of the current position of the user based on the data of the past stored in the local 300 or global database 320. The UE 110 shall then start the measurements of the receive signal level (GSM, UMTS/HSPA and LTE) and receive signal quality (UMTS/HSPA, LTE) only for the frequencies and scrambling codes (UMTS) defined in this list. If receive signal level and quality exceed configurable thresholds, the best suited frequency shall be selected. In case that a cell change is triggered the identified target cell shall be used with preference. Only in case that receive level and quality do not fulfil the requirements, the measurements shall be extended to other frequencies according to the standard procedure.

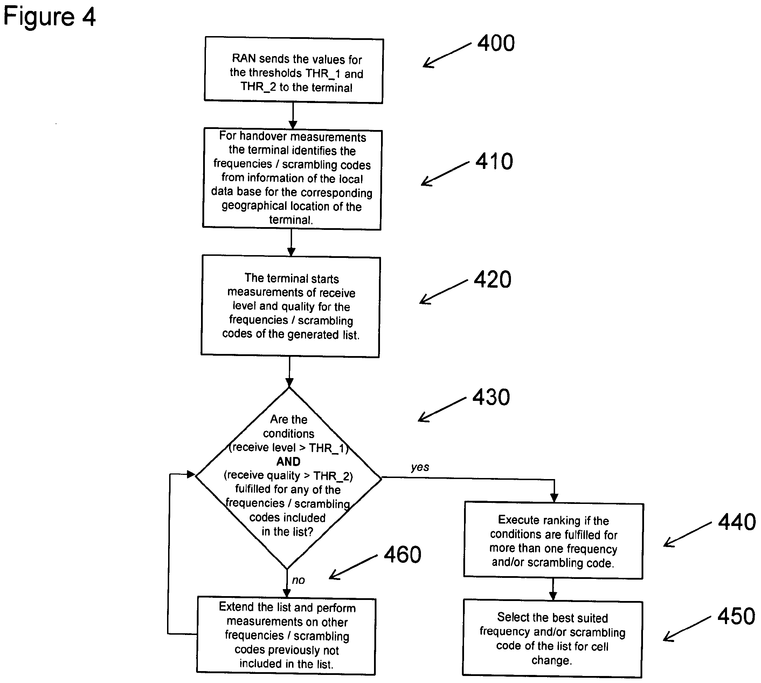

The algorithm used for this procedure is described in Figure 4. The UE is informed by the Radio Access Network (RAN) about the thresholds THR_1 for the minimum receive level and THR_2 for the minimum receive quality requirements. This step 400 can be executed on event base, e.g. during the login procedure to the network or periodically, e.g. as broadcast message. Changes in the 3GPP standard are required, i.e. the thresholds THR_1 and THR_2 have to be defined and the way of sending the message as broadcast information or dedicated signalling. Furthermore, reaction of the UE 110 after reception of the message has to be defined.

For handover measurements the terminal 110 identifies the frequencies and scrambling codes (UMTS) from information of the local database 300 for the corresponding geographical location of the terminal in step 410. Instead of scanning a higher number of frequencies according to the 3GPP procedure the UE 110 starts in step 420 measurements only for the frequencies and scrambling codes included in the generated list.

Step 430 defines via an if-condition whether to extend neighbourhood cell search or to stop the measurements and select one of the frequencies included in the generated list. If both conditions are fulfilled for at least one of the frequencies included in the generated list, i.e.

$$(\text{receive level} > \text{THR\_1}) \text{ AND } (\text{receive quality} > \text{THR\_2}), \qquad (\text{equation 1})$$

the target is achieved. If the conditions are fulfilled for more than one frequency, a ranking of the frequency candidates shall be executed in step 440. The ranking process shall weight level and quality criteria and the frequency for which the overall score is highest shall be selected. This is the best suited frequency or frequency and scrambling code combination to be used for cell change according to step 450. The selected frequency or frequency and scrambling code combination is reported to the network for handover or cell reselection decisions.

If the conditions in equation 1 are not fulfilled for any of the frequencies included in the generated list scanning of frequencies or frequency and scrambling code combinations shall be extended according to the procedure based on the current status of technology. This step is described in 460. This procedure shall be executed each time scanning of frequencies is done by the UE 110.

It is possible that scanning of frequencies is done autonomously by the UE 110 using data stored in the local database 300 in Figure 2 or sent via a dedicated data connection from the global database 320 to the local database 300. This solution does not require changes in the 3GPP standard but software modifications of the mobile terminals 110. The thresholds THR_1 and THR_2 can be hard coded in the memory of the UE 110 and/or configured during software installation by the operator before selling the UE 110 to subscribers or they can be transferred from the network to the UE 110 via dedicated data connection.

Also, it might be possible that the UE 110 ranks the frequencies to be scanned according to the information stored in its local database 300 or received from the global database 320 and changes the sequence of frequencies or frequency and scrambling code combinations (UMTS) for which receive level and receive quality measurements are performed. In this embodiment the UE 110 starts the standard process for scanning frequencies. If information about measurements at given location are available, the UE 110 first performs measurements for these frequencies, i.e. the ordering of the frequency list is modified. If suited frequencies or frequency and scrambling code combinations are identified, i.e. the condition in equation 1 is fulfilled, the identified frequency or frequency and scrambling code combination shall be proposed for cell change.

Consistency of data stored in the database 300, 320, 330:
Data shall be continuously updated. As network operators change the frequency plan from time to time, the measurement time shall be used to identify out-of-date information in case of conflicting entries.

Autonomous decision in case of failures of network based decisions:
The UE 110 might perform autonomously decisions about the selected target cell if the procedure of network based decision for handover or cell reselection fails. This allows continuity of the call that might have been dropped without using the procedure described in this invention.

According to the invention the information stored in the databases 300 and 320 in Figure 2 can be used for network optimisation. For this purpose the global database 320 is connected via the interface 350 to the network planning database 360. All information relevant for network planning shall be transferred via this interface, i.e. especially data about receive level and quality for the corresponding frequency at given geographical position. This information shall be used to optimise network planning by identifying areas of poor coverage or poor quality, areas of frequent call drops and for handover parameter optimisation.

The benefit of the invention is provided for network optimisation by keeping data that are discarded according to the current state of technology and using them for network planning aspects. This invention can be applied to all cellular communication systems, not necessarily restricted to the 3GPP standards GSM, UMTS/HSPA and LTE.

## Claims

1. A method for optimising mobility management in a cellular network with a least one mobile terminal wherein the mobile terminal performs the steps:

   i. Measuring the receive signal level and receive signal quality, during a handover and/or cell reselection procedure for a number of neighbouring cells and the serving cell,
   ii. combining these data with information about the physical frequency on which they were determined, and where applicable with the used scrambling code,
   iii. storing said measurement data in a global database for future use, wherein the global database is connected to a network planning database and said measured data stored in the global database is transferred to the network planning database and used for network planning by identifying areas of poor coverage or poor quality or areas of frequent call drops, and for handover parameter optimisation.

2. The method of claim 1 wherein said measurement data is stored in a local and global database and preferable the local and global databases are periodically and/or event triggered and/or in real time synchronized and further preferable at least one local database is assigned to each mobile terminal and the global database is accessible by each mobile terminal or rather each local database.

3. The method according to any one of the preceding claims wherein additional information is stored together with the measurement data, for instance information about the current geographical position of the mobile terminal and/or the current time of the measurement and/or the currently used radio access technology and/or the currently scanned frequency and/or the currently used scrambling code and/or the current best server and/or any quality related information in active mode and/or information about the event triggering the measurement.

4. The method according to any one of the preceding claims wherein said stored measurement data and/or said additional information stored in the local database is used by a respective mobile terminal for possible handover and/or cell reselection procedures and/or by a roaming mobile terminal for PLMN selection wherein said stored data is preferably used in a situation in which conventional handover or cell reselection procedures fail.

5. The method according to any one of the preceding claims wherein the network and/or the user terminal accesses and analyzes the stored measurement data for generating a frequency list including relevant frequencies, and where applicable scrambling codes of neighbouring cells of the respective mobile terminal for a possible handover and/or cell reselection procedure and/or PLMN selection, wherein the frequency and scrambling code list is preferably derived from a measurement performed by this and/or any other mobile terminal in the past.

6. The method according to any one of the preceding claims wherein measurements performed by a mobile terminal and stored in its local database are transferred preferably via the air interface to the mobile network and stored in a global database that is connected to network entities of the mobile network and wherein relevant data is preferably transferred from the local database of one terminal to the local database of another terminal via any physcial or logical interface.

7. The method according to claims 5 or 6 wherein relevant data is transferred from the global database preferably via the air interface to a plurality of mobile terminals.

8. The method according to any one of claims 5 to 7 wherein during a handover and/or cell reselection procedure and/or PLMN selection the mobile terminal starts measuring the received signal level and quality on all or at least some of the frequencies, and where applicable scrambling codes included in said frequency list, and wherein the measured received signal level and quality for each frequency of the frequency list, and where applicable frequency and scrambling code combination, is advantageously compared to at least one target threshold pair and if the received signal level and signal quality exceeds the least one pair of thresholds the cell/PLMN of the identified frequency and, where applicable scrambling code, is preferably proposed as a target cell for a handover or a cell reselection procedure or as a target PLMN for roaming.

9. The method according to any one of claims 5 to 8 wherein the best suited frequency or frequency and scrambling code combination is selected if more than one candidate fulfils the at least one requirement, in particular by ranking the suitable frequencies, and where applicable frequency and scrambling code combinations and selecting the best frequency or frequency and scrambling code combination dependent on weighted level and quality criteria, wherein the measuring procedure is preferably extended to a higher number of frequencies, for instance provided by a conventional cell neighbour list, if none of the frequencies or frequency and scrambling code combinations included in the frequency list fulfils the at least one requirement.

10. The method according to any one of the preceding claims wherein during a handover or cell reselection procedure a conventional neighbour list is compared to a frequency list, and where applicable scrambling code list, derived from the stored data and measurements of the receive signal level and quality of neighbouring cells are only performed by the mobile terminal for matching frequencies and wherein if the received signal level and quality of any of the measured frequencies exceeds at least one defined threshold the cell of the identified frequency, and where applicable scrambling code, shall be proposed as a target cell for handover or cell reselection and the network shall be informed about this proposal.

11. The method according to any of claims 5 to 10 wherein a decision for a suitable frequency/scrambling code/cell for a handover or cell reselection procedure is made autonomously by the mobile terminal.

12. The method according to any one of the preceding claims wherein the collection of data in the local database is manually initated and terminated by the user via a mobile application.

13. A mobile cellular network comprising means for performing the method according to any one of the preceding claims.

14. A mobile terminal comprising means for performing the mobile terminal performed steps of the method of any one of claims 1 to 12.

**Patentansprüche**

1. Verfahren zur Optimierung der Mobilitätsverwaltung in einem Mobilfunknetz mit mindestens einem mobilen Endgerät, wobei das mobile Endgerät die folgenden Schritte durchführt:

   i. Messen des Empfangssignalpegels und der Empfangssignalqualität während einer Prozedur der Übergabe und/oder Zellenneuauswahl für eine Anzahl von benachbarten Zellen und die aktive Zelle,
   ii. Kombinieren dieser Daten mit Informationen über die physikalische Frequenz, auf der sie ermittelt wurden, und gegebenenfalls mit dem verwendeten Scrambling-Code,
   iii. Speichern der Messdaten in einer globalen Datenbank zur späteren Verwendung,

   wobei die globale Datenbank mit einer Netzplanungsdatenbank verbunden ist und die in der globalen Datenbank gespeicherten Messdaten zu einer Netzplanungsdatenbank übertragen werden und zur Netzplanung verwendet werden, indem Bereiche mit schlechter Abdeckung oder schlechter Qualität oder Bereiche mit häufigen Gesprächsunterbrechungen identifiziert werden, sowie zur Optimierung der Übergabeparameter.

2. Verfahren nach Anspruch 1, wobei die Messdaten in einer lokalen und globalen Datenbank gespeichert werden und vorzugsweise die lokale und globale Datenbank periodisch und/oder ereignisabhängig ausgelöst werden und/oder in Echtzeit synchronisiert werden und weiterhin vorzugsweise mindestens eine lokale Datenbank jedem mobilen Endgerät zugeordnet ist und die globale Datenbank von jedem mobilen Endgerät oder vielmehr jeder lokalen Datenbank zugänglich ist.

3. Verfahren nach einem der vorhergehenden Ansprüche, wobei zusätzliche Informationen zusammen mit den Messdaten gespeichert werden, beispielsweise Informationen über die aktuelle geographische Position des mobilen Endgeräts und/oder die aktuelle Zeit der Messung und/oder die aktuell verwendete Funkzugangstechnologie und/oder die aktuell gescannte Frequenz und/oder den aktuell verwendeten Scrambling-Code und/oder den aktuell besten Server und/oder alle qualitätsbezogenen Informationen im aktiven Modus und/oder Informationen über das die Messung auslösende Ereignis.

4. Verfahren nach einem der vorhergehenden Ansprüche, wobei die gespeicherten Messdaten und/oder die in der lokalen Datenbank gespeicherten Zusatzinformationen von einem entsprechenden mobilen Endgerät für mögliche Prozeduren der Übergabe und/oder Zellenneuauswahl und/oder von einem roamenden mobilen Endgerät zur PLMN-Auswahl verwendet werden, wobei die gespeicherten Daten vorzugsweise in einer Situation verwendet werden, in der herkömmliche Prozeduren der Übergabe oder Zellenneuauswahl scheitern.

5. Verfahren nach einem der vorhergehenden Ansprüche, wobei das Netz und/oder das Benutzerendgerät auf die gespeicherten Messdaten zugreift und diese analysiert, um eine Frequenzliste zu generieren, die relevante Frequenzen und ggf. Scrambling-Codes benachbarter Zellen des jeweiligen mobilen Endgeräts für eine mögliche Prozedur der Übergabe und/oder Zellenneuauswahl und/oder PLMN-Auswahl enthält, wobei die Frequenz- und Scrambling-Code-Liste vorzugsweise von einer Messung stammt, die von diesem und/oder einem anderen mobilen Endgerät in der Vergangenheit durchgeführt wurde.

6. Verfahren nach einem der vorhergehenden Ansprüche, wobei Messungen, die von einem mobilen Endgerät durchgeführt und in seiner lokalen Datenbank gespeichert werden, vorzugsweise über die Luftschnittstelle zu dem Mobilfunknetz übertragen und in einer globalen Datenbank gespeichert werden, die mit Netzeinheiten des Mobilfunknetzes verbunden ist, und wobei relevante Daten vorzugsweise von der lokalen Datenbank eines Endgeräts zu der lokalen Datenbank eines anderen Endgeräts über eine beliebige physikalische oder logische Schnittstelle übertragen werden.

7. Verfahren nach den Ansprüchen 5 oder 6, wobei relevante Daten aus der globalen Datenbank vorzugsweise über die Luftschnittstelle an eine Vielzahl mobiler Endgeräte übertragen werden.

8. Verfahren nach einem der Ansprüche 5 bis 7, wobei das mobile Endgerät während einer Prozedur der Übergabe und/oder Zellenneuauswahl und/oder PLMN-Auswahl beginnt, den Pegel und die Qualität des empfangenen Signals auf allen oder wenigstens einigen Frequenzen zu messen, und gegebenenfalls in der Frequenzliste enthaltene Scrambling-Codes, und wobei der gemessene Empfangssignalpegel und die Qualität für jede Frequenz der Frequenzliste, sowie gegebenenfalls die Kombination aus Frequenz und Scrambling-Code, vorteilhafterweise mit mindestens einem Paar von Zielschwellenwerten verglichen wird, und wenn der empfangene Signalpegel und die Signalqualität das mindestens eine Schwellenwertpaar überschreiten, wird die Zelle/PLMN der identifizierten Frequenz und gegebenenfalls der Scrambling-Code vorzugsweise als Zielzelle für eine Prozedur der Übergabe oder Zellenneuauswahl oder als Ziel-PLMN für das Roaming vorgeschlagen.

9. Verfahren nach einem der Ansprüche 5 bis 8, wobei die am besten geeignete Frequenz oder Kombination aus Frequenz und Scrambling-Code ausgewählt wird, wenn mehr als ein Kandidat die mindestens eine Anforderung erfüllt, insbesondere durch das Ranking der geeigneten Frequenzen, und gegebenenfalls Kombinationen aus Frequenz und Scrambling-Code, und wobei die beste Frequenz oder Kombination aus Frequenz und Scrambling-Code in Abhängigkeit von gewichteten Pegel- und Qualitätskriterien ausgewählt wird, wobei das Messverfahren vorzugsweise auf eine höhere Anzahl von Frequenzen erweitert wird, die beispielsweise durch eine herkömmliche Liste von benachbarten Zellen bereitgestellt wird, wenn keine der in der Frequenzliste enthaltenen Frequenzen oder Kombinationen aus Frequenz und Scrambling-Code die mindestens eine Anforderung erfüllt.

10. Verfahren nach einem der vorhergehenden Ansprüche, wobei während einer Prozedur der Übergabe oder Zellenneuauswahl eine herkömmliche Nachbarliste mit einer Frequenzliste und ggf einer Scrambling-Code-Liste verglichen wird, aus den gespeicherten Daten abgeleitet wird, und Messungen des Empfangssignalpegels und der Empfangsqualität von benachbarten Zellen durch das mobile Endgerät nur zum Abgleich von Frequenzen durchgeführt werden und wobei, wenn der Empfangssignalpegel und die Empfangsqualität irgendeiner der gemessenen Frequenzen mindestens einen definierten Schwellenwert überschreitet, die Zelle der identifizierten Frequenz und gegebenenfalls des Scrambling-Codes, als Zielzelle für eine Übergabe oder Zellenneuauswahl vorgeschlagen wird und das Netz über diesen Vorschlag informiert wird.

11. Verfahren nach einem der Ansprüche 5 bis 10, wobei eine Entscheidung über eine geeignete Frequenz / einen geeigneten Scrambling-Code / eine geeignete Zelle für eine Prozedur der Übergabe oder Zellenneuauswahl von dem mobilen Endgerät autonom getroffen wird.

12. Verfahren nach einem der vorhergehenden Ansprüche, wobei die Erfassung von Daten in der lokalen Datenbank vom Benutzer manuell über eine mobile Anwendung initiiert und beendet wird.

13. Mobilfunknetz, das Mittel zur Durchführung des Verfahrens nach einem der vorhergehenden Ansprüche umfasst.

14. Mobiles Endgerät, das Mittel zur Durchführung der mit dem mobilen Endgerät durchgeführten Schritte des Verfahrens nach einem der Ansprüche 1 bis 12 umfasst.

## Revendications

1. Procédé permettant d'optimiser la gestion de la mobilité dans un réseau cellulaire avec au moins un terminal mobile, dans lequel le terminal mobile effectue les étapes suivantes :

   i. mesure du niveau du signal de réception et de la qualité du signal de réception, lors d'une procédure de transfert intercellulaire et/ou de resélection de cellule pour un certain nombre de cellules voisines et la cellule de service,
   ii. combinaison de ces données avec des informations sur la fréquence physique sur laquelle elles ont été déterminées, et le cas échéant avec le code de brouillage utilisé,
   iii. stockage de ces données de mesure dans une base de données mondiale pour une utilisation future,

   dans lequel la base de données mondiale est connectée à une base de données de planification de réseau et lesdites données mesurées stockées dans la base de données mondiale sont transférées vers la base de données de planification de réseau et utilisées pour la planification de réseau en identifiant des zones de faible couverture ou de mauvaise qualité ou des zones de pertes d'appel fréquentes, et pour l'optimisation des paramètres de transfert intercellulaire.

2. Procédé selon la revendication 1, dans lequel lesdites données de mesure sont stockées dans une base de données locale et mondiale et, de préférence, les bases de données locales et mondiales sont déclenchées périodiquement et/ou par un événement et/ou synchronisées en temps réel, et en outre de préférence au moins une base de données locale est affectée à chaque terminal mobile et la base de données mondiale est accessible par chaque terminal mobile ou plutôt chaque base de données locale.

**3.** Procédé selon l'une quelconque des revendications précédentes, dans lequel des informations supplémentaires sont stockées avec les données de mesure, par exemple, des informations sur la position géographique actuelle du terminal mobile et/ou l'heure actuelle de la mesure et/ou la technologie d'accès radio actuellement utilisée et/ou la fréquence actuellement balayée et/ou le code de brouillage actuellement utilisé et/ou le meilleur serveur actuel et/ou toute information relative à la qualité en mode actif et/ou des informations sur l'événement déclenchant la mesure.

**4.** Procédé selon l'une quelconque des revendications précédentes, dans lequel lesdites données de mesure stockées et/ou lesdites informations supplémentaires stockées dans la base de données locale sont utilisées par un terminal mobile respectif pour des procédures de transfert intercellulaire et/ou de resélection de cellule possibles et/ou par un terminal mobile itinérant pour la sélection de PLMN, ces données stockées étant de préférence utilisées dans une situation dans laquelle les procédures classiques de transfert intercellulaire ou de resélection de cellule échouent.

**5.** Procédé selon l'une quelconque des revendications précédentes, dans lequel le réseau et/ou le terminal utilisateur accède et analyse les données de mesure stockées pour générer une liste de fréquences comprenant des fréquences pertinentes, et, le cas échéant, des codes de brouillage de cellules voisines du terminal mobile respectif pour une éventuelle procédure de transfert intercellulaire et/ou de resélection de cellule et/ou la sélection de PLMN, la liste des codes de fréquence et de brouillage étant de préférence dérivée d'une mesure effectuée par ce terminal mobile et/ou tout autre terminal mobile dans le passé.

**6.** Procédé selon l'une quelconque des revendications précédentes, dans lequel les mesures effectuées par un terminal mobile et stockées dans sa base de données locale sont transférées de préférence via l'interface air vers le réseau mobile et stockées dans une base de données mondiale qui est connectée aux entités de réseau du réseau mobile et dans lequel les données pertinentes sont transférées de préférence du base de données locale d'un terminal à la base de données locale d'un autre terminal via une interface physique ou logique.

**7.** Procédé selon les revendications 5 ou 6, dans lequel les données pertinentes sont transférées de la base de données mondiale, de préférence via l'interface air, vers une pluralité de terminaux mobiles.

**8.** Procédé selon l'une quelconque des revendications 5 à 7, dans lequel, lors d'une procédure de transfert intercellulaire et/ou de resélection de cellule et/ou de la sélection de PLMN, le terminal mobile commence à mesurer le niveau et la qualité du signal reçu, sur toutes ou au moins quelques fréquences, et, le cas échéant, les codes de brouillage inclus dans ladite liste de fréquences, et dans lequel le niveau et la qualité du signal reçu mesurés pour chaque fréquence de la liste de fréquences, et le cas échéant la combinaison de fréquence et de code de brouillage, est avantageusement comparé à au moins une paire de seuils cibles et si le niveau de signal reçu et la qualité du signal dépassent ladite au moins une paire de seuils, la cellule/PLMN de la fréquence identifiée et, le cas échéant, le code de brouillage, est proposé de préférence comme cellule cible pour une procédure de transfert intercellulaire ou de resélection de cellule ou comme PLMN cible pour l'itinérance.

**9.** Procédé selon l'une quelconque des revendications 5 à 8, dans lequel la fréquence la mieux adaptée ou la combinaison de fréquence et de code de brouillage la mieux adaptée est sélectionnée si plus d'un candidat remplit la au moins une exigence, en particulier en classant les fréquences appropriées, et, le cas échéant, les combinaisons de fréquence et de code de brouillage et en sélectionnant la meilleure fréquence ou combinaison de fréquence et de code de brouillage dépendent d'un niveau pondéré et de critères de qualité, dans lequel la procédure de mesure est de préférence étendue à un nombre plus élevé de fréquences, par exemple fourni par une liste conventionnelle de cellules voisines, si aucune des fréquences ou des combinaisons de fréquences et de codes de brouillage figurant dans la liste de fréquences ne satisfait à la au moins une exigence.

**10.** Procédé selon l'une quelconque des revendications précédentes, dans lequel, lors d'une procédure de transfert intercellulaire ou de resélection de cellule, une liste de voisins conventionnelle est comparée à une liste de fréquences et, le cas échéant, à une liste de codes de brouillage, dérivée des données stockées et des mesures du niveau du signal de réception et de la qualité de cellules voisines ne sont effectuées que par le terminal mobile pour les fréquences correspondantes, et dans lequel, si le niveau du signal reçu et la qualité de l'une des fréquences mesurées dépassent au moins un seuil défini, la cellule de la fréquence identifiée et, le cas échéant, le code de brouillage, sera proposé comme cellule cible pour le transfert intercellulaire ou la resélection de cellule et le réseau sera informé de cette proposition.

**11.** Procédé selon l'une quelconque des revendications 5 à 10, dans lequel une décision concernant une fréquence/code de brouillage/cellule appropriée pour une procédure de transfert intercellulaire ou de resélection de cellule est prise de manière autonome par le terminal mobile.

12. Procédé selon l'une quelconque des revendications précédentes, dans lequel la collecte de données dans la base de données locale est initiée manuellement et arrêtée par l'utilisateur via une application mobile.

13. Réseau cellulaire mobile comprenant des moyens pour réaliser le procédé selon l'une quelconque des revendications précédentes.

14. Terminal mobile comprenant des moyens pour réaliser les étapes effectuées par le terminal mobile du procédé selon l'une quelconque des revendications 1 à 12.

Figure 1

EP 2 963 974 B1

## Figure 2

EP 2 963 974 B1

## Figure 3

```
class measurements
{
        int technology;              // coded value of radio access technology
        int frequency;               // coded value of scanned physical frequency
        float positionLatitude;      // GPS position Latitude
        float positionLongitude;     // GPS position Longitude
        float positionAltitude;      // GPS position Altitude

        …
        int receiveLevel;            // measured receive level [dBm]
        float receiveQual;           // estimated receive quality [dB]
};
```

EP 2 963 974 B1

# Figure 4

**400** — RAN sends the values for the thresholds THR_1 and THR_2 to the terminal

**410** — For handover measurements the terminal identifies the frequencies / scrambling codes from information of the local data base for the corresponding geographical location of the terminal.

**420** — The terminal starts measurements of receive level and quality for the frequencies / scrambling codes of the generated list.

**430** — Are the conditions (receive level > THR_1) AND (receive quality > THR_2) fulfilled for any of the frequencies / scrambling codes included in the list?

yes

**440** — Execute ranking if the conditions are fulfilled for more than one frequency and/or scrambling code.

**450** — Select the best suited frequency and/or scrambling code of the list for cell change.

no

**460** — Extend the list and perform measurements on other frequencies / scrambling codes previously not included in the list.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010121418 A

- FR 12

### Non-patent literature cited in the description

- UE Procedures in Idle Mode and Procedures for Cell Reselection in Connected Mode (3GPP TS 25.304 version 5.2.0 Release 5). *ETSI TS 125 304 V5.2.0*, 2002, http://www.etsi.org/deliver/etsi_ts/125300_125399/125304/05.02.00_60/ts_125304v 050200p.pdf
- **M. ANAS ; F. D. CALABRESE ; P.-E. OSTLING ; K. I. PEDERSEN ; P. E. MOGENSEN.** Performance Analysis of Handover Measurements and Layer 3 Filtering for UTRAN LTE. *proceedings of 18th Annual IEEE International Symposium on Personal, Indoor and Mobile Radio Communications(PIMRC'07)*, http://vbn.aau.dk/files/12841511/PIMRC2007_Hando ver.pdf

- **H. HOLMA ; A. TOSKALA.** WCDMA for UMTS: HSPA Evolution and LTE. John Wiley &Sons, 2010
- Requirements for support of radio resource management (FDD) (Release 9). *3GPP TS 25.133 V9.2.0*, 2009, http://www.3gpp.org
- **M. ANAS ; F. D. CALABRESE ; P.-E. OSTLING ; K. I. PEDERSEN ; P. E. MOGENSEN.** Performance Analysis of Handover Measurements and Layer 3 Filtering for UTRAN LTE. *proceedings of 18th Annual IEEE International Symposium on Personal, Indoor and Mobile Radio Communications (PIMRC'07)*, http://vbn.aau.dk/files/12841511/PIMRC2007_Hando ver.pdf